# EUROPEAN PATENT APPLICATION

(11) **EP 2 104 066 A1**
(43) Date of publication of application: **23.09.2009**
(21) Application number: 08250910.0
(22) Date of filing: 17.03.2008
(51) Int. Cl.: G06Q 30/00

(54) **Ticketing system**

(71) Applicant: British Telecommunications Public Limited Company, London Greater London EC1A 7AJ (GB)
(72) Inventor: The designation of the inventor has not yet been filed
(74) Representative: Geffen, Nigel Paul

(57) **Abstract**

A system for providing tickets to a user terminal (4₁,4₂), comprising a network interface for communicating with the user terminals (6), a ticketing module and a application interface to enable a number of ticket issuers and service providers to access the ticketing module.

## Description

The present invention relates to apparatus for and a method of delivering a ticket to a user and the subsequent management of that ticket.

A number of efforts are being made to distribute tickets electronically. Railway companies, airlines and postal carriers are providing their customers with electronic tickets via email, which can then be printed by the user at work or home. Work is also underway to trial wallets which may be held in an electronic device, such as a mobile phone or personal digital organiser (PDA). This approach often requires the ticket issuers to send the tickets directly to the end user, using for example their email address or a E.164 number to send the ticket via SMS/MMS. Such an approach leads to significant costs and complexities (churn etc.) for the ticket issuers.

According to a first aspect of the present invention there is provided a system for providing tickets to one or more user devices, the system comprising: a ticketing module; an application interface such that, in use, a ticket issuer may access the functionality of the ticketing module; one or more network interfaces such that, in use the system may communicate with one or more user terminals; wherein, in use, (i) in response to a request, a ticket issuer generates a ticket and sends it to the ticketing module; and (ii) the ticketing module sends the ticket to the user terminal.

The system may further comprise an authentication module such that, in use, only a ticket issuer and/or a user terminal that is registered with the system is able to access the functionality of the ticketing module. The system may further comprise a payment module, such that in use, a ticket issuer is charged to access the functionality of the ticketing module.

According to a second aspect of the present invention there is provided a method of providing a ticket to a user terminal, the method comprising the steps of: (a) sending a request to a ticket issuer; (b) the ticket issuer generating a ticket in response to the request; (c) the ticketing issuer sending the ticket generated in step (d) to the ticketing module; and (d) the ticketing module sending the ticket to the user terminal.

In one embodiment of the present invention in step (d) the ticketing module sends a live ticket to a first user terminal associated with a user and the method comprises the further steps of: (e) the user sending a ticket transfer request to the ticketing module; (f) the ticketing module deactivating the live ticket on the first user terminal associated with the user; and (g) the ticketing module sending a live ticket to a second user terminal associated with the user. Step (e) may further comprise sending a deactivated ticket to each of the other user terminals associated with the user. The method may comprise the yet further steps of: (h) the second user terminal deleting the live ticket after it has been presented for redemption; (i) the second user terminal sending a message to the ticketing platform to confirm the deletion of the live ticket; and (j) the ticketing platform sending a message to each of the other user terminals associated with the user to delete the deactivated tickets.

In a further embodiment of the present invention in step (d) the ticketing module sends a deactivated ticket to a plurality of user terminals associated with a user and the method comprises the further steps of: (k) a first user terminal of the plurality of user terminals associated with a user sending a request to the ticketing module when the user wishes to present the ticket for redemption; and (I) the ticketing module sending a live ticket to the first user terminal.

The method may then comprise the further steps of: (m) the first user terminal deleting the live ticket after it has been presented for redemption; (n) the first user terminal sending a message to the ticketing platform to confirm the deletion of the live ticket; and (o) the ticketing platform sending a message to each of the other of the plurality of user terminals associated with the user to delete the deactivated tickets.

In an alternative, the method may comprise the steps of: (p) the user sending a ticket transfer request to the ticketing module; (q) the ticketing module deactivating the live ticket on the first user terminal associated with the user; (r) the first user terminal sending a message to the ticketing platform to confirm the deactivation of the live ticket; and (s) the ticketing module sending a live ticket to a second user terminal of the plurality of user terminals associated with a user. The method may then comprise the further steps of: (t) the second user terminal deleting the live ticket after it has been presented for redemption; (u) the second user terminal sending a message to the ticketing platform to confirm the deletion of the live ticket; and (v) the ticketing platform sending a message to each of the other of the plurality of user terminals associated with the user to delete the deactivated tickets.

In step (a) the request may be sent directly to the ticket issuer or alternatively the request may be sent to the ticket issuer via the ticketing module. The request may be sent by a user terminal.

According to a third aspect of the present invention there is provided a computer program product comprising computer executable code for performing any of the methods as described above.

Embodiments of the present invention will now be described, by way of example only, with reference to the accompanying drawings in which:
Figure 1 is a schematic block diagram of apparatus for delivering a ticket to a user from any one of plurality of service providers via any one of a plurality of user devices and *vice versa* in accordance with the present invention;
Figure 2 is a schematic block diagram of a register;
Figure 3 is a schematic block diagram of the apparatus shown in Figure 1;
Figure 4 is a schematic block diagram of a user device shown in Figure 1;
Figure 5 is a process flow diagram of a method of connecting a user device to a service agency;
Figure 6 is a process flow diagram of a method of maintaining a connection with a service agency;
Figure 7 is a process flow diagram of a method of disconnecting from a service agency;
Figure 8 shows a schematic depiction of a flowchart which illustrates a first method of distributing a ticket to multiple device agents according to the present invention;
Figure 9 shows a schematic depiction of a flowchart which illustrates a second method of distributing tickets to multiple device agents according to the present invention; and
Figure 10 shows a schematic depiction of a flowchart which illustrates a third method of distributing tickets to multiple device agents according to the present invention.

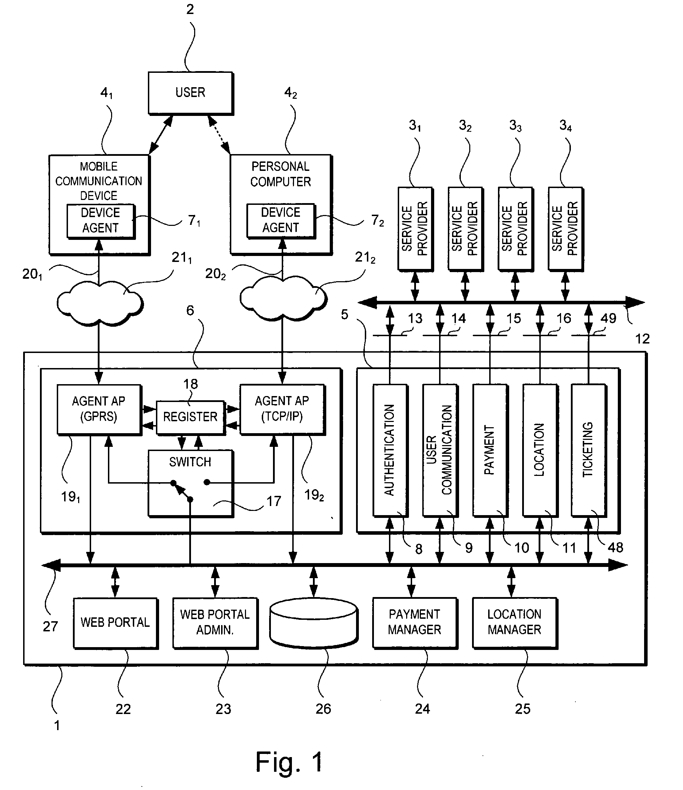

Referring to Figure 1, apparatus 1 for delivering a message to a user 2 from any of plurality of service providers 3₁, 3₂, 3₃, 3₄ via any of a plurality of user devices 4₁, 4₂ in accordance with the present invention is shown. The apparatus 1 provides a point of access for the service providers 3₁, 3₂, 3₃, 3₄ to deliver and receive messages to and from the user 2 and is hereinafter referred to as a "service agency". For clarity, only one user 2 is shown in Figure 1 and in this specification the system is described with reference to only one user 1. However, the service agency 1 can deliver messages to any of a plurality of users.

The service agency 1 includes a gateway 5 for communicating with service providers 3₁, 3₂, 3₃, 3₄ and a module 6 for communicating with device agents 7₁, 7₂ operating on respective user devices 4₁, 4₂.

The service provider gateway 5 includes a module 8 for receiving and handling requests to authenticate the user 2, a module 9 for receiving and handling requests to communicate with the user 2, a module 10 for receiving and handling requests for settling payment made by the user 2, a module 11 for receiving and handling requests to locate the user 2 and a module 48 for receiving and handling requests to manage tickets for the user 2. The user communication module 9 can receive requests from service providers 3₁, 3₂, 3₃, 3₄ and from the other modules 8, 10, 11.

The service providers 3₁, 3₂, 3₃, 3₄ are connectable to the modules 8, 9, 10, 11 & 48 by a network 12, such as the Internet, via respective application programming interfaces 13, 14, 15, 16, 49. The service providers 3₁, 3₂, 3₃, 3₄ each include a server (not shown) which includes, among other things, processing means (not shown) and interfacing means (not shown).

The device agent communicating module 6 includes a switch 17 for routing outgoing communication data to a selected device agent 7₁, 7₂, a register 18 and device agent access points 19₁, 19₂. Two device agent access points 19₁, 19₂ are illustrated. However, additional access points (not shown) may be provided to support further network types or transport requirements.

The switch 17 may be configured to refer to the register 18 to identify which device agent 7₁, 7₂ to use for each user 2 at any given moment. Alternatively the arrangement can be such that multiple, typically all, device agents of any user be addressed with a message for that user.

The device agent access points 19₁, 19₂ co-operate with the device agents 7₁, 7₂ to establish connections 20₁, 20₂ via networks 21₁, 21₂. The device agent access points 19₁, 19₂ authenticate the device agents 7₁, 7₂. Authentication based on user name and password or PIN or stronger forms of authentication based on V.509 certificates or biometrics, such as fingerprint or iris scans, may be used. The device agents 7₁, 7₂ identify the user and their availability and can also identify the type of device on which it operates and the capabilities of device, such as bandwidth, memory availability, processing power and forms of output.

The device agent access points 19₁, 19₂ are provided for each type of user device connectivity, in this example general packet radio service (GPRS) network and an IP network. Device agent access points for different or additional types of network connectivity may be provided, such as for universal mobile telephone system (UMTS) network, wireless local area network based on IEEE 802.11x standards, such as so-called "WiFi", wireless metropolitan area network based on IEEE 802.16 standards, sometimes referred to as "WiMax" and other wireless and wired device connectivity. The access points 19₁, 19₂ need not necessarily form part of network infrastructure and/or provide a network interface for a given type of connectivity. Instead, the access points 19₁, 19₂ may be connected via a network (not shown), such as the Internet, to the appropriate network infrastructure (not shown), such as a GPRS network, or to a remote network interface (not shown), such as a wireless LAN access point or network adapter, cable modem.

Referring still to Figure 1, the service agency 1 also includes a web portal 22, a web portal administrator module 23, a payment manager 24, a location manager 25 and a database 26 connected via a connection layer 27. The web portal 22 allows a user 2 to log in to the service agency 1 and configure settings, such as granting permission to the service agency 1 to handle certain functions, such as payment, view activity, such as payment activity, and set privacy and security policies.

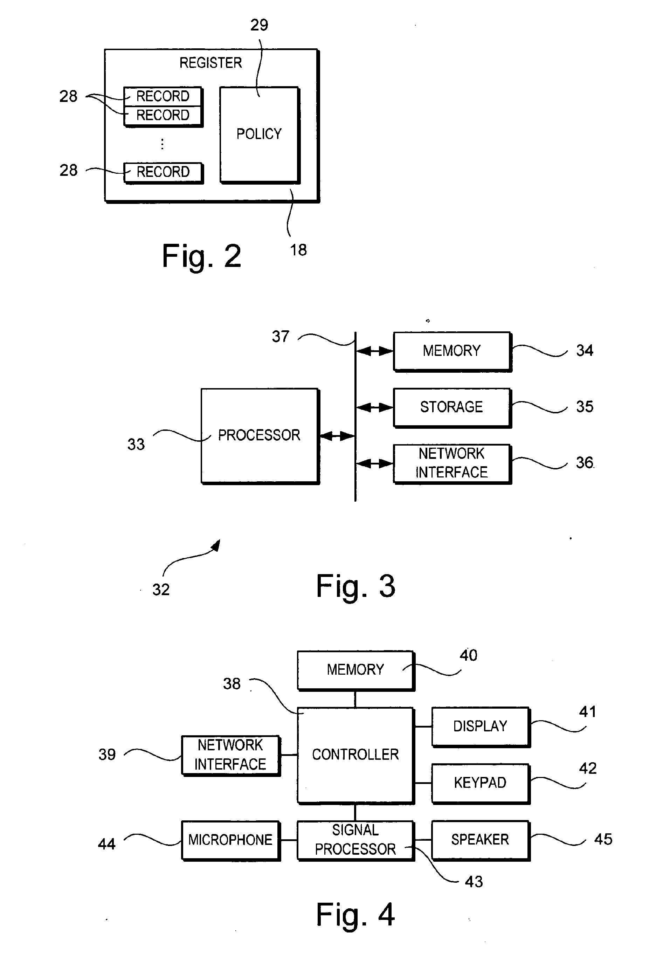

Referring to Figure 2, the register 18 holds records 28 of all connected device agents 7₁, 7₂ for the user 2. Each record 28 includes the identity of the user 2, the identity of a device agent access point 19₁, 19₂ and information about user availability. The register 18 also holds a policy 29 for determining which device agent 7₁, 7₂ should be used.

Referring to Figure 3, the service agency 1 is run on a server 32 or other computer. The server 32 has a processor 33, memory 34, storage 35 and at least one network interface 36, connected by a system bus 37. The server 32 may include other elements, such as caches (not shown), and peripherals, such as displays and keyboards (not shown), but these are omitted for clarity. The service agency 1 may be implemented as a distributed system, such as a cluster of servers.

Referring again to Figure, 1 first and second user devices 4₁, 4₂ are a mobile communications device 4₁, in the form of a 2.5G mobile telephone handset, and a personal computer (PC) 4₂ respectively. Different or additional user devices (not shown) may be used, such as a third-generation mobile telephone handset, a personal data assistant, a smart phone, a set-top box or other computing device capable of being connected to a network. Furthermore, more than one user device of the same type may be provided. For example, the user may have access to more than one PC. The mobile communications device 4₁ is provided with GPRS connectivity to a mobile telephone network and the personal computer 4₂ is provided with wired connectivity to the Internet. User devices of the same type may have different network connectivity. Even if user devices have the same network connectivity, then the network connectivity or the network may have different operating capabilities, such as different bandwidth, and/or different pricing structure. Furthermore, any network (or network segment) may be provided by different network providers. Thus, even though the user can be reached by at least two user devices of similar capability, it may be preferable to contact the user via a specific user device. Referring to Figure 4, the mobile communications device 4₁ is shown in more detail. The device 4₁ includes a controller 38, a network interface 39, memory 40, a display 41, keypad 42, a signal processor 43, a microphone 44 and a speaker 45. It will be appreciated that user devices 4₁, 4₂ need not be mobile and can have a different configuration. The device agents 7₁, 7₂ (Figure 1) can be pre-loaded on a user device 4₁, 4₂. Alternatively, the user may download the device agent 7₁, 7₂ as-and-when required. This can be convenient if the user accesses a user device to which they would not normally have access, such as a PC in an Internet café.

In one implementation of the present invention, the user terminals communicate with the service agency using an XML-based protocol which was running on top of TCP/IP. This enables the terminals to operate using fixed internet and mobile 2.5G (GPRS) data services. Subsequently, the XML-based protocol was extended in order to make it compatible' with XMPP (Extensible Messaging & Presence Protocol, see www.xmppp.org) and also with IMS (see www.3gpp.org). It will be understood by those skilled in the art that this issues are not key to the teaching of the present invention and that other transmission schemes and protocols may be used in the alternative. For example, the terminal may have wireless connection that is equivalent to or faster than GPRS, such as 3G, HSDPA, etc.

Referring again to Figure 1, the service agency 1 and device agents 7₁, 7₂ cooperate to allow the user 2 to be incorporated more efficiently and effectively as part of a service delivery system. The service agency 1 and device agents 7₁, 7₂ can improve delivery of service to the user by providing a set of re-useable user-oriented service functions.

The service agency 1 can provide non-real-time functions, while the device agents 7₁, 7₂ can provide the real-time functions and real-time user interaction support. The device agents 7₁, 7₂ may be present in different forms on each user device 4₁, 4₂ and the service agency 1 determines which device agent 7₁, 7₂ instances are available and preferable for performing different functions.

For example, if the user 2 is carrying a mobile communications device 4₁ and accessing a powerful desktop personal computer 4₂, then the service agency 1 can take advantage of the capability, performance and usability of the personal computer 4₂ and route services or other service-related communication to the device agent 7₂ running on the personal computer 4₂. However, if the user 2 logs off the personal computer 4₂, then the service agency 1 can employ the device agent 7₁ on the mobile communications device 4₁ and route services or service-related communication to the device agent 7₁. Even if the mobile communications device 4₁ cannot support a desired operation, the user 2 can still be notified of events and execution options, such as delivery of content, for example a copy of "Monsters Inc." to the user's home media centre (not shown). Thus, the user can be integrated into the system more effectively and the service agency 1 can help to optimise service delivery and provide service-related messaging over any network and device.

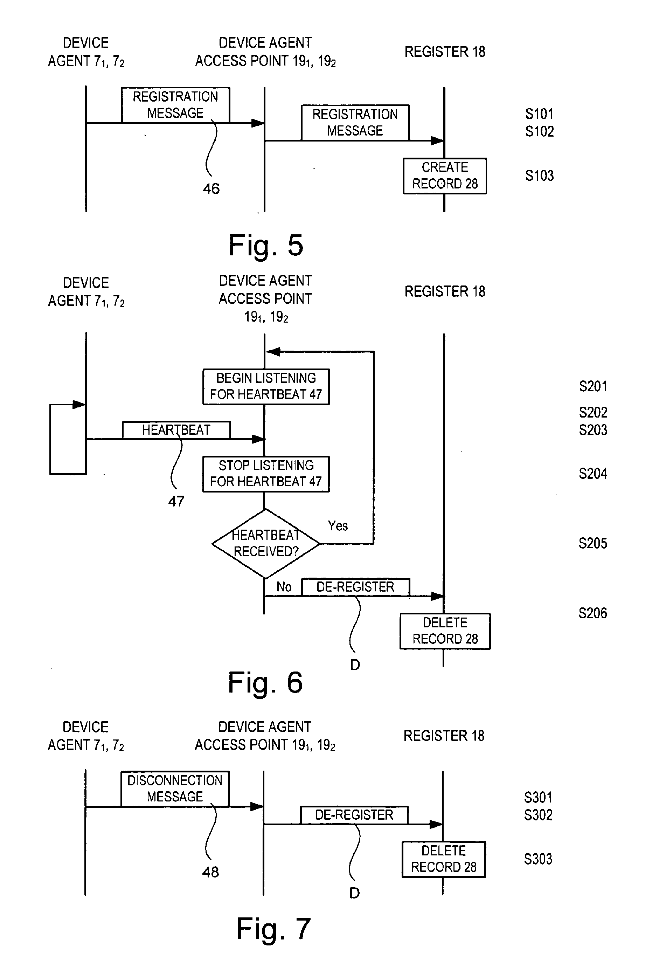

When the user device 4₁, 4₂ is connected to a corresponding network 21₁, 21₂, each device agent 7₁, 7₂ registers with the service agency 1. Preferably, the service agency 1 authenticates the device agent 7₁, 7₂. Referring to Figure 5, each device agent 7₁, 7₂ sends a registration message 46 to the service agency 1 (step S101). For example, the registration message 46 may include XML data in the following form:

```
<?xml version=\"1.0\"?>
<register>
<version>J2SEv1.0</version>
<userID>sa:mary.delaney@bt.com</userID>
</register>
```

The registration message 46 is sent to an access point 19₁, 19₂ according to device connectivity. The access point 19₁, 19₂ may be specified by the device agent 7₁, 7₂, for example using an IP address or telephone number. Alternatively, the network 21₁, 21₂ may route the registration message to a specific access point 19₁, 19₂.

Once the registration message 46 has been received by an access point 19₁, 19₂, it is forwarded to the register 18 (step S102). The register 18 creates a record 28 including the user identity (userID) and the access point 19₁, 19₂ and may include data describing the device agent 7₁, 7₂, connection session and device capabilities (step S103). The register 18 may also search for other entries for the same user and may update the routing policy 29 (Figure 2).

Referring to Figure 6, each device agent 7₁, 7₂ connected to the service agency 1 sends a confirmation message 47 to the service agency 1 to maintain the connection. The confirmation message 47 is hereinafter referred to as a "heartbeat" and can take the following form:

```
<?xml version=\"1.0\"?><heartbeat/>
```

The access point 19₁, 19₂ begins listening for heartbeats 47 (step S201). The device agent 7₁, 7₂, sends a heartbeat 47 (step S202). The device then sends a further heartbeat (S203), preferably periodically, for example at an interval between 1 and 100 seconds The access point 19₁, 19₂ determines whether the heartbeat 47 has been received within a given time window (steps S204 & S205). If the heartbeat 47 (or a predefined number of consecutive messages) is (are) not received as expected, then the access point 19₁, 19₂ sends an instruction D to the register 18 to deregister the device agent 7₁, 7₂ (step S205). The register 18 then removes the record 28 (step S206). A disconnection message (not shown) may be transmitted to the network 21₁, 21₂ for delivery to the device agent 7₁, 7₂. If the heartbeat 47 is received, then the access point 19₁, 19₂ continues listening (step S201).

Referring to Figure 7, each connected device agent 7₁, 7₂ can notify the service agency 1 that it wishes to disconnect itself from the service agency 1. The device agent 7₁, 7₂ sends a disconnection message 48 to the service agency 1 (step S301). For example, the disconnection message 48 may include XML data in the following form:

```
<?xml version=\"1.0\"?><bye/>
```

The access point 19₁, 19₂ receives the disconnection message 49 and sends an instruction D to the to the register 18 to deregister the device agent 7₁, 7₂ (step S302). The register 18 removes the record 28 (step S303). As explained above, the resister 18 maintains a list of records 28 of which device agents 7₁, 7₂ are connected. The register 18 also stores a routing policy 29 (Figure 2) for determining which device agent 7₁, 7₂ to use.

Referring to Figure 1 again, the service provider gateway 5 exposure mechanism is responsible for managing access to and use of the ticketing module. When a service provider is registered for access to the service provider gateway it will be authenticated and provided with keys or other access codes such that the gateway may be accessed. The service provider may be required to prove that it has the ability to pay any charges that may be incurred through the use of the gateway. With specific reference to the ticketing module, a service provider may provide one or more small images and/or logos that may be subsequently used in the ticketing operation.

The ticketing module 48 provides the following functionality with respect to electronic tickets, vouchers, keys etc. (for the purposes of the following discussion they will be referred to collectively as chits):
- accepts chits submitted by service providers over the ticketing API 49
- stores chits as required through their lifecycle
- allows a service provider to manage chits through their lifecycle over the ticketing API
- allows a device agent to manage chits through their lifecycle
- distributes chits to one or more device agents as required.

The device agent provides the following functionality:
- accepts chits from the ticketing module
- presents a GUI to the device user for the purpose of using the ticketing service
- allows chits to be presented
- enforces the chit lifecycle (e.g. deleting consumed chits)
- allows the user to browse their chits
- allows the user to transfer their chits to other persons where appropriate
- allow the user to transfer their chits to their other devices where appropriate.

Furthermore, the Application Programming Interface will include methods to provision chits to users, obtain details of the chits they have previously provisioned, modify chits and withdraw chits. This functionality will now be described in greater detail.

The ticketing module retains copies of all current chits such that they can be provisioned to users on a range of devices. Thus, if a user changes their mobile device, their collection of chits can automatically be transferred to the new device without requiring the involvement of the service provider.

The chit specification comprises all aspects required to define the chit to be issued, including:

**Table 1: Chit Specification**

| Parameter | Purpose |
|---|---|
| shortName | e.g. "Open Return" or "Room key". |
| | Provides a summary description. |
| description | A fuller description. |
| issuerRef | Any reference which is of use to the SP. |
| validfrom | Date/time. |
| validTo | Date/time. |
| presentationOptions | Specifies which technologies the ticket may be presented over. |
| | Possibilities include: textual presentation, conventional barcode, 2D barcode, WiFi, RFID, NFC, vCard, Bluetooth |
| issuerAux | A container for auxiliary data / information. |
| transferability | Indicates transferability of the ticket to other persons. |
| redemptionMethod | Presentation or consumption. If consumption, number of times it can be redeemed. |
| issuer | The SP's identity. |
| brandingImage | A small branding image such as a logo to provide a branded user experience on the End User's device. |
| presentTo | Address to which the ticket should be presented by the reading equipment (such as a URL). |

The chit may also include a field which enables the service provider to indicate the type of chit being specified, for example, a ticket, voucher, key, etc. For a ticket, the ticketing module may invite the service provider to also indicate the price of the ticket in the chit definition. Such price information may also be included within chits of other types. All chits are allocated a unique reference by the ticketing module which is used to identify them throughout their lifecycle.

As the service provider gateway imposes a secure registration and access mechanism on a service provider, this provides identity assurance for the service provider. Accordingly, it is possible to extend the chit specification to include the issuer and brandingImage parameters listed in Table 1 above. The chit definition may also include the presentTo parameter, which provides an address (for example a URL) to which the chit should be presented by the reading equipment. This allows the ticket to be read by any reading equipment, thus decoupling chit reading from the rest of the chit solution so that a service provider need not be tied to a particular ticketing solution provider.

The service agency will authenticate a device agent and allow a connection to be made between the device agent and the ticketing module (as well as the other modules provided by the service agency). As has been described above, the ticketing module can communicate with device agents over XMPP or IMS (although it will be understood that other transport protocols and methods may also be used).

It has been found that the original XML-based protocol (see EP 05257213.8) can be extended to support the connection between a device agent and the ticketing module and it is believed that the device agents could also be supported over XMPP or IMS. The common requirement for the transport solution that is employed is that the device agent is able to communicate with the ticketing module and is able to perform ticketing functions which complement the behaviour of the ticketing module.

A transport protocol might send a chit to a device agent with the following XML:

```
     <?xml version="1.0"?>
       <ticket>
       <reference>982634</reference>
       <issuerID>SP74465</issuerID>
       <issuerName>Virgin Trains</issuerName>
       <shortName>Open Return</shortName>
       <description>Standard Open Return from Ipswich to Liverpool St
     departing and returning by 31/1/08.</description>
       <issuerRef>EA56478767</issuerRef>
       <price>52.46</price>
       <validFrom>080107000001</validFrom>
       <validTo>080131235959</validTo>
       <presentTo>http://virgintrains.com/ticketsink</presentTo>
       <presentation>2D_barcodeINFC</presentation>
       <transferability>full</transferability>
       <redemptionCount>1</redemptionCount>
       <image>http://imageserver.platform.com/23456.gif</image>
     </ticket>
```

The issuerID field holds the service agency's unique reference for the service provider. This enables a service provider to alter their name (for example from "One Railways" to "National Express East Anglia") without requiring that their platform ID be altered.

It will be seen that the ticket specified above
- can be presented by 2D barcode or Near Field Communications signal.
- is fully transferable.
- can be redeemed one time only (i.e. it must be consumed).

The device agent will retrieve the image referred to by the <image> tag for use in branding the ticket in the GUI. Alternatively, the image may be made available to the device agent by a number of other mechanisms, for example as a binary XML attachment.

Other types of chit would be sent in a similar way; for example, voucher- and key-type chits would be sent using <voucher> and <key> tags respectively rather than the <ticket> tag.

For the ticketing facility to be carried by a Jabber/XMPP instant messaging infrastructure, the XMPP protocol must be extended in the normal way such that the ticketing messages can be sent between the XMPP client and server. The client must also be extended to implement the required ticketing behaviour.

For the ticketing facility to be carried by IMS the ticketing messages have to be carried over SIP. SIP was designed primarily for session initiation but also supports message passing through its 'notify', 'publish' and 'info' mechanisms. These mechanisms have been used to support M2P over SIP and it is believed that the same approach would provide support for the ticketing facility. The IMS client must also be extended to implement the required ticketing behaviour.

Management of issued chits is performed by the device agent and it will be understood that this is a complex issue. For example some chits will be specified such that they may only be redeemed once, for example a train ticket might be specified such that it is only valid for a particular journey on a particular day, some chits may be capable of multiple redemption, for example a bus ticket may be valid for a given number of journeys and some chits may be used an unlimited amount, for example a discount voucher that may be used as many times as required before a specified expiry date. It is important that it is not possible to allow a chit to be redeemed more times than is allowed. Distribution of chits to all the user's devices would invite fraud since during times of network disconnection (either innocent or intentional), the mechanism cannot prevent duplicate presentation (it should be understood that although the chit reading system could theoretically detect duplicate presentation, this would require real-time checking which typically requires a high-availability, high-throughput network and back-end systems). Accordingly, 'live' versions of such chits (i.e. presentable instances) will only be distributed to the user's prime device. Non-live copies of the chit (i.e. for display purposes only) will be distributed to the user's other devices.

It will be understood that there are a number of different channels by which a ticket is purchased. For example, it may be purchased in a conventional manner from a website, ticketing machine, human ticketing agent, etc.. During the transaction, an address for a device agent (such as an XMPP address or an IMS SIP) address is provided to the ticket issuer such that a chit can be sent to a device agent via the ticketing module. If the particular user has a pre-existing relationship with the ticket issuer then the addresses of one or more device agents may already be held by the ticket issuer. Alternatively, a ticket may be purchased using the ticketing module of the present invention, with a request being sent to the ticket issuer from a device agent via the ticketing module. The chit can then be sent to the device agent in response to the received request.

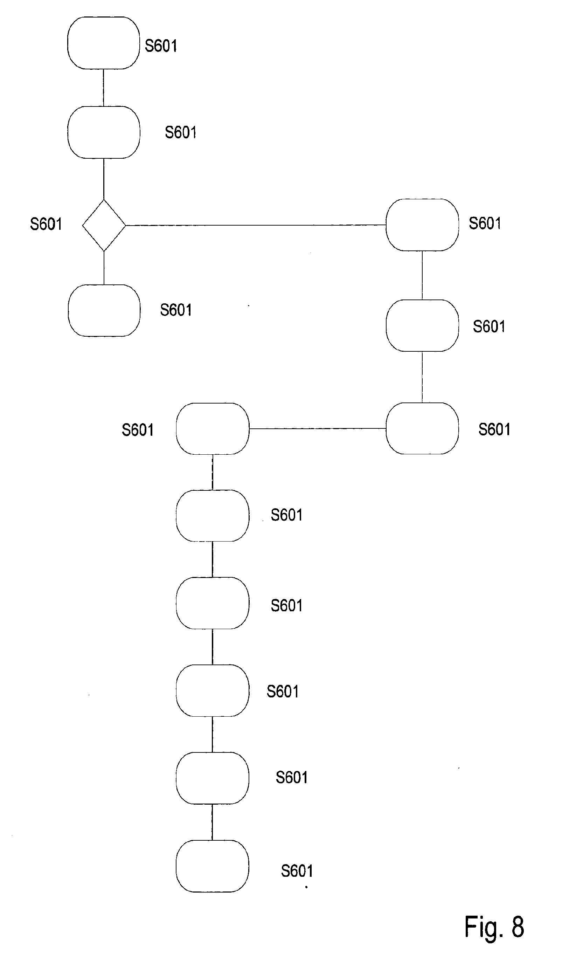

Figure 8 shows a schematic depiction of a flowchart which illustrates a first method of distributing chits to multiple device agents. At step S401 a service provider issues a chit which is accepted and stored by the ticketing module (S402). The chit may be issued in response to a request or the service provider may 'push' one or more chits to identified device agents or users. At step S403 the ticketing module determines whether the chit has a limited number of redemptions: if not then at S404 the chit is distributed to all the device agents associated with the user. If the chit has a limited redemption count then at S405 the ticketing module sends a live chit to the primary device agent associated with a particular user (see above with reference to Figure 2). At step S406 the ticketing agent then distributes a non-live chit to the user's other devices. At step S407 the user sends a request to the ticketing module that the live chit be transferred to a secondary device agent; in response the ticketing module sends a request to the primary device to disable the live chit (S408) and the primary device returns a confirmation that the live chit has been disabled (S409). Once the confirmation is received, the ticketing module sends a live chit to the secondary device (S410). The user is then able to present the live chit at the secondary device for redemption (S411). The secondary device deletes the chit and sends a message to the ticketing platform (S412), which then requests that all devices delete the received a chit. It can be seen from the above that there is only ever one live chit in existence at any one time, reducing the possibility of a chit from being redeemed more times than is allowed. It will be understood that if the user wished to redeem the live chit from the primary device agent then the process would effectively go from step S406 to S411.

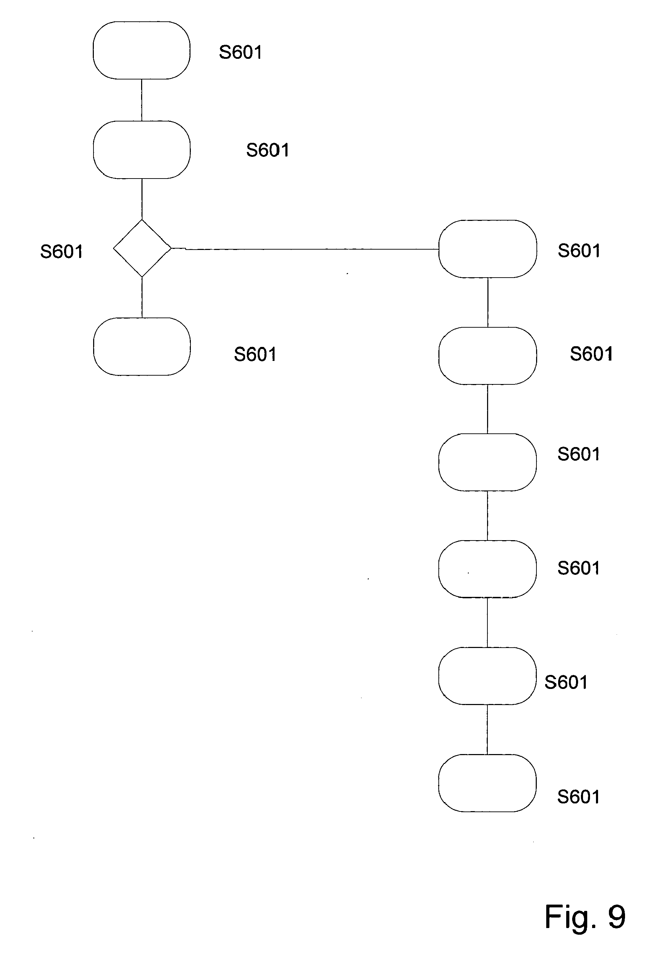

Figure 9 shows a schematic depiction of a flowchart which illustrates a second method of distributing chits to multiple device agents. At step S501 a service provider issues a chit which is accepted and stored by the ticketing module (S502). The chit may be issued in response to a request from a particular device agent or the service provider may 'push' one or more chits to identified device agents or users. At step S503 the ticketing module determines whether the chit has a limited number of redemptions: if not then at S504 the chit is distributed to all the device agents associated with the user. If the chit has a limited redemption count then at S505 the ticketing module sends a non-live chit to all of the device agents associated with a user. At S506 the user sends a request to the ticketing module for a live chit to be presented to a selected device agent. The ticketing module returns a live chit to the selected device agent (S507) and the user can present the chit for redemption (S508). After the chit has been redeemed, the selected device agent deletes the chit and sends a confirmation message to the ticketing module (S509); in response the ticketing module instructs (S510) all of the other device agents to delete the non-live chits that are being held.

It can be seen that the method described above with reference to Figure 9 should mitigate against fraudulent use of chits, as a single live chit is only sent to a user when the user is ready to redeem the chit. This pre-fetching of the chit may be performed by the user long before they wish to present the chit (e.g. if they are concerned that there may not be network coverage at the location where chit presentation will be required).

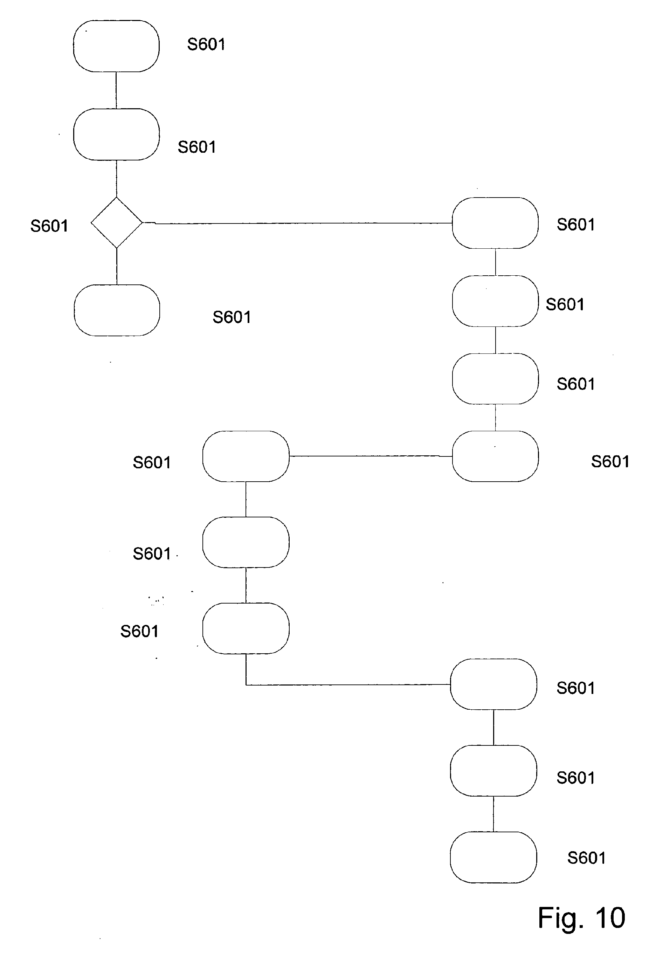

Figure 10 shows a schematic depiction of a flowchart which illustrates a third method of distributing chits to multiple device agents. At step S601 a service provider issues a chit which is accepted and stored by the ticketing module (S602). The chit may be issued in response to a request from a particular device agent or the service provider may 'push' one or more chits to identified device agents or users. At step S603 the ticketing module determines whether the chit has a limited number of redemptions: if not then at S604 the chit is distributed to all the device agents associated with the user. If the chit has a limited redemption count then at S605 the ticketing module sends a non-live chit to all of the device agents associated with a user. At S606 the user sends a request to the ticketing module for a live chit to be sent to the primary device agent and in response the ticketing module sends the live chit to the primary device agent (S608). The user may then request that a live chit be sent to a secondary device agent (S608): in response the ticketing module sends a request to the primary device agent to disable the live chit currently being held by the primary device agent (S609). Once the primary device agent confirms to the ticketing module that the live chit has been disabled (S610) then the ticketing module sends a live chit to the secondary device agent (S611). The user can then present the live chit for redemption (S612) using the secondary device agent: the secondary device agent will delete the chit after it has been redeemed and send a message to inform the ticketing module of the transaction (S613) and the ticketing module will then cause the other device agent(s) to delete the held chits (S614). It can be seen that the third method is an extension of the second method, enabling chits to be transferred from one device agent to another device agent.

It will be understood that the invention may be implemented using software that is run on a plurality of mobile terminals and servers. It will be understood that such software may be deployed to mobile terminals and/or servers via download, for example via the internet, or on some physical media, for example, DVD, CD-ROM, USB memory stick.

## Claims

1. A system for providing tickets to one or more user devices, the system comprising:
a ticketing module;
an application interface such that, in use, a ticket issuer may access the functionality of the ticketing module;
one or more network interfaces such that, in use the system may communicate with one or more user terminals;
wherein, in use,
(i) in response to a request, a ticket issuer generates a ticket and sends it to the ticketing module; and
(ii) the ticketing module sends the ticket to the user terminal.

2. A system according to Claim 1, wherein the system further comprises an authentication module such that, in use, only a ticket issuer that is registered with the system is able to access the functionality of the ticketing module.

3. A system according to Claim 1 or Claim 2, wherein the system further comprises an authentication module such that, in use, only a user terminal that is registered with the system is able to communicate with the ticketing module.

4. A system according to any preceding claim wherein in step (i) the request is generated by a user terminal.

5. A system according to any preceding claim wherein the system further comprises a payment module, such that in use, a ticket issuer is charged to access the functionality of the ticketing module.

6. A system according to any preceding claim wherein the system further comprises a payment module, such that in use, a user terminal is charged when the ticketing module sends the ticket to the user terminal.

7. A method of providing a ticket to a user terminal, the method comprising the steps of:
(a) sending a request to a ticket issuer;
(b) the ticket issuer generating a ticket in response to the request;
(c) the ticketing issuer sending the ticket generated in step (d) to the ticketing module; and
(d) the ticketing module sending the ticket to the user terminal.

8. A method according to Claim 7 wherein in step (d) the ticketing module sends a live ticket to a first user terminal associated with a user and comprising the further steps of:
(e) the user sending a ticket transfer request to the ticketing module;
(f) the ticketing module deactivating the live ticket on the first user terminal associated with the user; and
(g) the ticketing module sending a live ticket to a second user terminal associated with the user.

9. A method according to Claim 8 wherein step (e) further comprises sending a deactivated ticket to each of the other user terminals associated with the user.

10. A method according to Claim 9, wherein the method comprises the further steps of:
(h) the second user terminal deleting the live ticket after it has been presented for redemption;
(i) the second user terminal sending a message to the ticketing platform to confirm the deletion of the live ticket; and
(j) the ticketing platform sending a message to each of the other user terminals associated with the user to delete the deactivated tickets.

11. A method according to Claim 7 wherein in step (d) the ticketing module sends a deactivated ticket to a plurality of user terminals associated with a user and comprising the further steps of:
(k) a first user terminal of the plurality of user terminals associated with a user sending a request to the ticketing module when the user wishes to present the ticket for redemption; and
(l) the ticketing module sending a live ticket to the first user terminal.

12. A method according to Claim 11, comprising the further steps of:
(m) the first user terminal deleting the live ticket after it has been presented for redemption;
(n) the first user terminal sending a message to the ticketing platform to confirm the deletion of the live ticket; and
(o) the ticketing platform sending a message to each of the other of the plurality of user terminals associated with the user to delete the deactivated tickets.

13. A method according to Claim 11, comprising the further steps of:
(p) the user sending a ticket transfer request to the ticketing module;
(q) the ticketing module deactivating the live ticket on the first user terminal associated with the user;
(r) the first user terminal sending a message to the ticketing platform to confirm the deactivation of the live ticket; and
(s) the ticketing module sending a live ticket to a second user terminal of the plurality of user terminals associated with a user.

14. A method according to Claim 13 comprising the further steps of:
(t) the second user terminal deleting the live ticket after it has been presented for redemption;
(u) the second user terminal sending a message to the ticketing platform to confirm the deletion of the live ticket; and
(v) the ticketing platform sending a message to each of the other of the plurality of user terminals associated with the user to delete the deactivated tickets.

15. A method according to any of claims 7 to 14, wherein in step (a) the request is sent directly to the ticket issuer.

16. A method according to any of claims 7 to 14, wherein in step (a) the request is sent to the ticket issuer via the ticketing module.

17. A method according to any of claims 7 to 16, wherein in step (a) the request is sent by a user terminal.

18. A computer program product comprising computer executable code for performing the method of any of claims 7 to 17.
